# EUROPEAN PATENT APPLICATION

(11) **EP 3 605 578 A1**
(43) Date of publication of application: **05.02.2020**
(21) Application number: 19185979.2
(22) Date of filing: 12.07.2019
(51) Int. Cl.: H01H 47/00, H01H 71/00, H01H 89/00, H01R 25/00, H02B 1/20, H02B 1/42

(54) **CIRCUIT BREAKER ARRANGEMENT FOR WIND TURBINES**

(30) Priority: 01.08.2018 DK PA201870510
(71) Applicant: VESTAS WIND SYSTEMS A/S, 8200 Aarhus N (DK)
(72) Inventor: Calhau Gonçalves, Luis Miguel, 8000 Aarhus C (DK); Hansen, Kenneth G., 8620 Kjellerup (DK)
(74) Representative: Vestas Patents Department

(57) **Abstract**

The invention relates to power protection system comprising first and second circuit breakers arranged in a series connection to break an electrical connection in an auxiliary connection between a power converter and an auxiliary system, where each of the first and the second circuit breakers has an input side for receiving an incoming flow of current and an output side for outputting the incoming flow of current, where each of the first and the second circuit breakers are configured so that the input side is to be located vertically above the output side, when mounted in normal orientation, and where the first and the second circuit breakers are mounted reverse of normal orientation so that one of the first and second circuit breakers is mounted with the output side vertically above the input side while the other circuit breaker is mounted reversed with the input side vertically above the output side.

## Description

### FIELD OF THE INVENTION

The present invention relates to wind turbines, particularly to a method for breaking an electrical connection between the wind turbine and the power network.

### BACKGROUND OF THE INVENTION

Wind turbines tend to grow in size and power rating. Along with higher power output, the main transformer grows accordingly. The short circuit level is pushed up along with larger transformer MVA ratings which demand high breaking capacity of circuit breakers on the low voltage side of transformer.

The auxiliary system of a wind turbine receives power from the power generation system of the wind turbine. In order to protect the electrical wind turbine component, the auxiliary system is connected to the power system via an auxiliary circuit breaker. Such circuit breakers do not need to be able to transmit large currents, but must have a sufficient high current breaking capacity.

There is a need for circuit breakers which has a suitable breaking capacity for such increased short circuit levels. However, such circuit breakers suffer from one or more of the problems that may not be readily available, they are expensive or they are difficult to install due to large physical sizes.

Accordingly, there is a need for solutions which addresses these problems.

EP 2 647 839 A2 discloses a power distribution system for a wind turbine having a base and a nacelle, the wind turbine being coupled to a power grid. The system can include a main power circuit, the main power circuit including a generator, a main power transformer, and a first current interrupter. The system can further include an auxiliary circuit, the auxiliary circuit including a second current interrupter, an auxiliary transformer, and at least one auxiliary component, and a junction coupled to the main power circuit, the auxiliary circuit, and the power grid.

EP 2 647 839 A2 discloses different solutions with current interrupters, i.e. circuit breakers. However, the inventors of the present invention have appreciated that an improved solution is of benefit, and has in consequence devised the present invention.

### SUMMARY OF THE INVENTION

It is an object of the invention to improve wind turbines with respect to the above-mentioned problems with circuit breakers, i.e. problems with respect to availability of circuit breakers with a sufficient breaking capacity, investment prices of wind turbines, their physical sizes and other problems.

In a first aspect of the invention there is provided a power protection system which comprises
- a first circuit breaker and a second circuit breaker arranged in a series connection to break an electrical connection in an auxiliary connection between a power converter and an auxiliary system, where
   - each of the first and the second circuit breakers has an input side for receiving an incoming flow of current and an output side for outputting the incoming flow of current, where each of the first and the second circuit breakers are configured so that the input side is to be located vertically above the output side, when mounted in normal orientation, and where
   - the first and the second circuit breakers are mounted reverse of normal orientation so that one of the first and second circuit breakers is mounted with the output side vertically above the input side while the other circuit breaker is mounted reversed with the input side vertically above the output side.

The vertical location of the input side of the circuit breaker above the output side defines possible orientations of the circuit breakers where the mounting is performed so that the input side is located higher than the output side with respect to a ground level.

Due to the reversed orientation, the input and output sides of two circuit breakers can be located close to each other while both circuit breakers (e.g. their upper sides) are located at the same or substantially the same height. Thus, the electrical connection between the two circuit breakers can be made short. A short connection reduces the risk of short circuits between the circuit breakers. In comparison, if both circuit breakers have the same orientation, the connection would be long or the circuit breakers would have to be inappropriately displaced vertically relative to each other to reduce the length of the electrical connection.

Advantageously, the use of at least two series connected circuit breakers provides a voltage division over the circuit breakers implying that circuit breakers with a lower voltage rating can be used.

By using circuit breakers having the same or substantially the same current breaking capacity they will break the connection simultaneously so that the voltage rating is not exceeded.

The input and output sides refer to parts or locations of the circuit breakers which facilitate input and output electrical connectors for receiving and outputting the incoming flow of current. Circuit breakers are normally configured to that the input side is located in one part of the circuit breaker intended to be pointing upwards and the output side is located in a different part of the circuit breaker intended to be pointing downwards, when mounted in normal orientation. Each circuit breaker is configured as a unit where the input and output sides have fixed locations relative to each other within the unit.

The auxiliary connection between the power converter and the auxiliary system, or part of this connection, may be comprised by the power protection system.

According to an embodiment, the first and the second circuit breakers are mounted so that the first circuit breaker is displaced laterally to the second circuit breaker. Advantageously, the circuit breakers are mounted side by side and possibly at the same height to allow a short electrical connection. For example, according to an embodiment, the output side of one of the first or the second circuit breakers is vertically aligned with the input side (i.e. the input and output sides have the same mounting-height) of the other circuit breaker.

According to an embodiment, each of the first and second circuit breakers defines a vertical orientation line extending between the input side and the output side and the vertical orientation lines for the first and second circuit breakers are parallel or makes an acute angle of less than 45°. Within the constraint of mounting orientations where the input side of at least one of the circuit breakers should be located vertically above the output side, it may be possible to mount the circuit breakers so that their vertical orientation lines are not parallel, e.g. in order to fit the circuit breakers to a mounting environment. For example, the vertical orientation line of each of the first and second circuit breakers may be parallel with or make an acute angle of less than 45° with respect to a normal to a ground plane.

According to an embodiment, the first and the second circuit breakers are mounted to minimize a length of an electrical connection between the output side of one of the first or the second circuit breakers and the input side of other circuit breaker. The electrical connection between the output and input sides may be comprised by the power protection system and may form part of the auxiliary connection between the power converter and the auxiliary system. The electrical connection may be located above or below the input and output sides, i.e. the sides which are connected by the electrical connection (the sides between which the electrical connection extends). For example, the circuit breakers may be mounted so that input and output sides - between which sides the electrical connection extends - faces downwards. In this case, the electrical connection would be located below the input and output sides.

According to an embodiment, the power protection system further comprises a third circuit breaker of a similar configuration as the first and second circuit breakers, where the second and the third circuit breakers are arranged in a parallel connection and so that the parallel connection is arranged in series with the first circuit breaker, and where
- the first circuit breaker is mounted reversed with respect to the second and third circuit breakers, so that the first circuit breaker is mounted with the output side vertically above the input side while the second and third circuit breakers are mounted reversed with their input sides vertically above their respective output sides, or vice versa.

Advantageously, the two or more parallel connected circuit breakers can by used to power different circuits of the auxiliary system. In case of a fault one of the parallel connected circuit breakers would break simultaneously with the series connected circuit breaker.

According to an embodiment, the power protection system comprises the auxiliary connection and the auxiliary connection comprises the circuit breakers. Advantageously, the power protection system may be configured as a power connection which possibly also includes the connection(s) between the two or more circuit breakers.

According to an embodiment, the power protection system is configured for a wind turbine and comprises the auxiliary connection arranged to deliver electrical power from a power converter of the wind turbine to the auxiliary system of the wind turbine.

A second aspect of the invention relates to a power system comprising
- a power protection system according to the first aspect, and
- a power converter and a network connection arranged to deliver electrical power from the power converter to a network, where the auxiliary connection is arranged to deliver electrical power from the power converter to the auxiliary system.

A third aspect of the invention relates to a wind turbine comprising a power protection system according to the first aspect.

A fourth aspect relates to a method for protecting a power system, the method comprises
- providing a first circuit breaker and a second circuit breaker arranged in a series connection to break an electrical connection in an auxiliary connection between a power converter and an auxiliary system, where
   - each of the first and the second circuit breakers has an input side for receiving an incoming flow of current and an output side for outputting the incoming flow of current, where each of the first and the second circuit breakers are configured so that the input side is intended to be located vertically above the output side, when mounted in normal orientation, and where
   - the first and the second circuit breakers are mounted reverse of normal orientation so that one of the first and second circuit breakers is mounted with the output side vertically above the input side while the other circuit breaker is mounted reversed with the input side vertically above the output side, and
- operating the first and second circuit breakers to break the electrical connection simultaneously, or substantially simultaneously, if the current in the auxiliary connection exceeds a current threshold.

In general, the various aspects and embodiments of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows a wind turbine,
Figs. 2A-B show examples of a power protection system,
Figs. 3A-C show examples of electrical connections between circuit breakers, and
Figs. 4A-B show possible mounting orientations of the circuit breakers.

### DESCRIPTION OF EMBODIMENTS

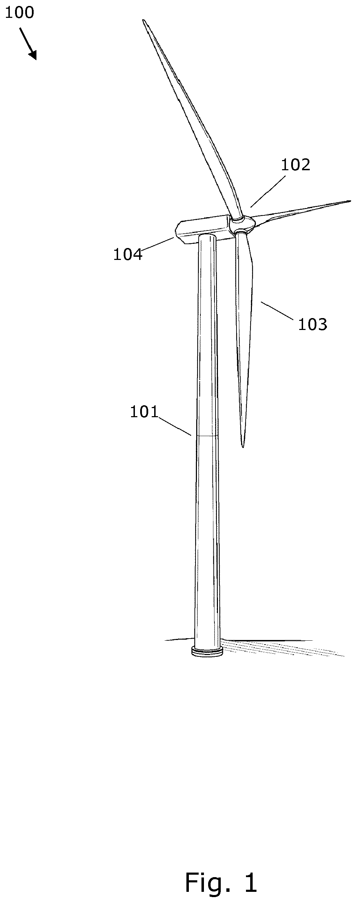

Fig. 1 shows a wind turbine 100 (WTG) comprising a tower 101 and a rotor 102 with at least one rotor blade 103, such as three blades. The rotor is connected to a nacelle 104 which is mounted on top of the tower 101 and being adapted to drive a generator situated inside the nacelle via a drive train. The rotor 102 is rotatable by action of the wind. The wind induced rotational energy of the rotor blades 103 is transferred via a shaft to the generator. Thus, the wind turbine 100 is capable of converting kinetic energy of the wind into mechanical energy by means of the rotor blades and, subsequently, into electric power by means of the generator. The generator supplies electrical power to a power converter. The power converter supplies electric power to a power network via a transformer which transforms the power converter output voltage to a higher voltage at the output side of the transformer.

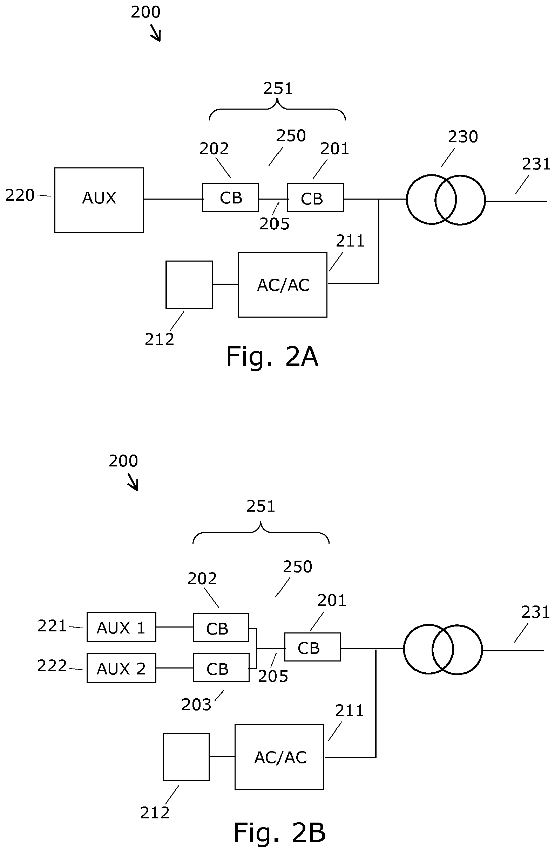

Fig. 2A shows an example of a power protection system 251 and a power system 200. The power system comprises a power converter 211, a network connection 230 arranged to deliver electrical power from the power converter to a network 231, and an auxiliary connection 250 arranged to deliver electrical power from the power converter 211 as well as from the network 231 to an auxiliary system 220 of the wind turbine.

The power protection system 251 and the power system 200 may be configured to be used with wind turbines or other power generating systems like photovoltaic power generating systems.

The power converter 211 receives power from a generator 212 driven by the rotor 102 of the wind turbine and controls the amount of active and reactive power to be delivered to the network 231 via the network connection 231. The network connection may comprise a transformer 230 arranged to transform the voltage from the output of the power converter 211 to a higher voltage.

The network 231 may be a local medium voltage network of a wind turbine park or the network 231 may be the high voltage transmission network.

The auxiliary connection 250 is arranged to supply a small fraction of the power provided via the output of the power converter 211 and/or the network 231 to auxiliary components (the auxiliary system 220) of the wind turbine. Such auxiliary components comprise the lubrication systems, cooling and heating systems, pitch actuators, components of the power converter such as converter heating systems and other electrical consumers.

The auxiliary connection 250 comprises at least first and second circuit breakers 201, 202 arranged in series and arranged to break the electrical connection between the output of the power converter 211 and the auxiliary system 220. The first and second circuit breakers 201, 202 and possibly further circuit breakers constitutes a power protection system 251. It is understood, that the power protection system 251 need not - but alternatively could - include electrical connections such as the connection 205 between the circuit breakers.

Particularly, the circuit breakers are configured to transmit the required current levels of the auxiliary system, but also to break the connection in case of a short circuit, e.g. in the auxiliary system 220, or other fault which requires a current interruption.

In case of a short circuit in the auxiliary system 220, a large current would flow through the auxiliary connection and could cause damage or even fire in the wind turbine.

Accordingly, the circuit breakers 201-203 must be configured so that they are capable of breaking a current corresponding to the short circuit current, i.e. the current breaking capability of the circuit breakers 201-203 must at least be at the level of the short circuit current of the power converter 211.

For example, during normal operation the auxiliary system 220 may consume in the range of 1-2 percent of the power supplied by the power converter 211. Thus, a current of e.g. 10A is flowing through the circuit breakers 201-201 to the auxiliary system 220, whereas a current of e.g. 1000A flows to the transformer. In case of a fault, like a short circuit in the auxiliary system 220, the current in the circuit breakers 201-202 will increase towards the short circuit current, which may be greater than the 1000A. In order to avoid damage of the wind turbine auxiliary components, the fault must be cleared by the circuit breakers 201-202 which should break the electrical connection.

Thus, in general the circuit breakers 201-202 needs to be configured to transmit maximum current levels consumed by the auxiliary system 220 and to break the connection is the current exceeds a maximum current such as the short circuit current.

Circuit breakers which satisfy the requirements of the circuit breakers to be able to transmit a relatively low current during normal operation and to have a high current breaking capacity are not available for the voltage range used by the power converter. That is, circuit breakers which are able to transmit higher currents like 100A during normal operation and with the required current breaking capacity may be available, but are over-dimensioned with respect to the nominal current transmission level.

Lower rated auxiliary circuit breakers with the required breaking capacity, i.e. circuit breakers capable of breaking high currents but with a low rated transmission current, may not available in the market. On the middle range of the low voltage circuit breakers, the breaking capability is limited for the upper range of the low voltage area. Thus, the use two circuit breakers in series, working together in a coordinated way, can increase the necessary level of breaking capacity compared to the use of a single circuit breaker.

By connecting two or more circuit breakers 201-202 in series, the voltage drop between the source (here the output of the power converter 211 and/or the network 231) and the load (here the auxiliary system 220) is divided over the circuit breakers. Accordingly, in the example in Fig. 2A, the voltage drop of each of the circuit breakers is only half of the total voltage drop. Thus, a circuit breaker 220 with a lower voltage rating, i.e. a specification of the largest allowed voltage drop during a circuit break, can be used.

In Fig. 2A the circuit breakers 201-202 are also denoted the first circuit breaker 201 and the second circuit breaker 202.

Fig. 2B shows a similar principle with three circuit breakers, i.e. first, second and third circuit breakers 201-203. The second and third circuit breakers 202, 203 functions as circuit breakers for different second and third auxiliary systems or circuits 221, 222, respectively. For example, the second auxiliary system 222 may include heating mats arranged to melt ice on the blades 103. Such mats require a large supply of electric power and, therefore, beneficially the second auxiliary system 202 is connected with a separate circuit breaker 203, e.g. for enabling a disconnection via a sensor controlled relay switch of the second circuit breaker 203.

The first circuit breaker 201 is connected in series with the second and third circuit breakers 201, 203, so that in case of a fault like a short circuit in any of the two auxiliary systems, the voltage drop will be divided over the first circuit breaker 201 and the second or the third circuit breaker 202, 203.

To ensure that the two series connected circuit breakers, or possible three or more series connected circuit breakers, break the connection at the same time so that the voltage drop over the arches will be equally divided, the series connected circuit breakers need to break the connection at the same time, or substantially at the same time. This is achieved by ensuring, e.g. by testing, that the series connected circuit breakers will break the circuit at the same current level.

The output of the first circuit breaker 201 is connected with the input of the second and/or third circuit breaker 202,203 via the connection 205. The connection 205 needs to be highly reliable and designed in a way so that risks of a short circuit fault in the connection 205 is minimized. That is, in case of a short circuit in the connection, only the first circuit breaker will experience the short circuit current, but may not be able to remove the arch during the breaking of the connection since the entire voltage drop is located over the first circuit breaker.

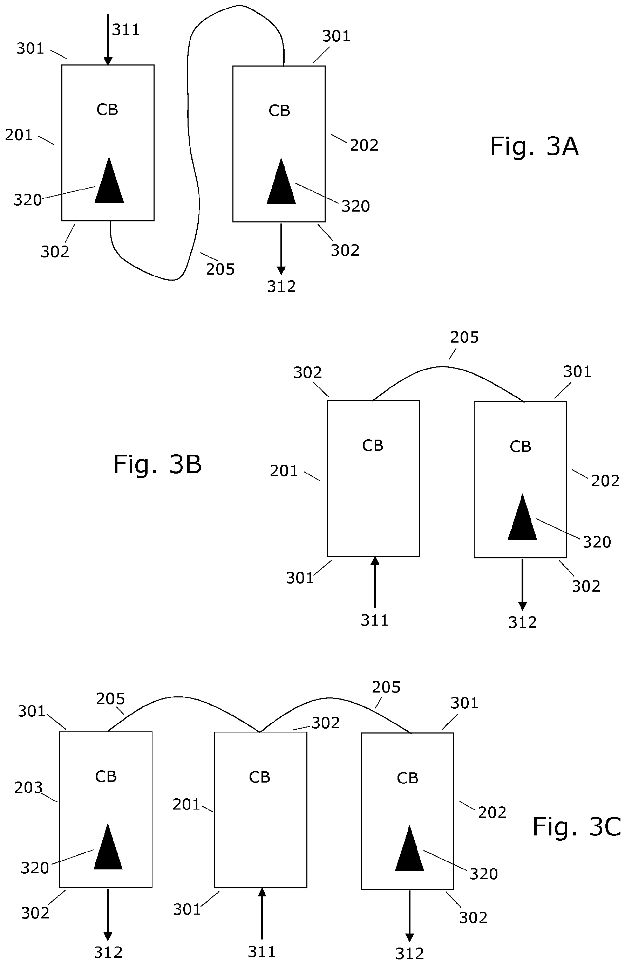

Fig. 3A shows an example of two series connected circuit breakers 201, 202. The circuit breakers has an input side 301 for receiving an incoming flow of current and an output side 302 for outputting the incoming flow of current. Thus, the first circuit breaker 201 receives current via input connection 311 from the power converter 211, the first circuit breaker 201 transmits the received current via the output side 302 to the input side 301 of the second circuit breaker 202 (possibly also the third circuit breaker 203), and the second circuit breaker 202 (possibly also the third circuit breaker 203) output the received current to the connected auxiliary systems 220-222 via the output connection 312.

Due to safety requirements, the circuit breakers should be mounted in a specific orientation such that the input side 301 is located uppermost and the output side 302 is located lowermost, i.e. so that input side 301 is located vertically above the output side 302. The alignment of the circuit breakers may deviate some degrees from a perfect upright orientation, but at least the input side 301 is intended to be located vertically above the output side 302, when mounted in normal orientation as intended by the manufacture.

One reason for these orientation requirements is that standard safety requirements should be fulfilled so that the circuit breaker can be locked out by a padlock 302 and operated by service personal. The correct padlock mounting requires the intended orientation as shown and discussed, as which ca be considered to be the normal orientation.

Furthermore, circuit breakers 201-203 are designed in such a way that the received electrical current flow from the input side 301 to the output side 302.

Thus, in order to fulfil the orientation and current direction requirements, the electrical connection and the orientation need to be as shown in Fig. 3A. This, requires a long electrical connection 205 between the two circuit breakers which is both space requiring and reduces the reliability with respect to limiting the risk for short circuit fault in the connection 205.

Fig. 3B shows an embodiment of the invention with the same circuit breakers as in Fig. 3A, but where the first and the second circuit breakers are mounted reversed so that one of the first and second circuit breakers (here the first circuit breaker 201) is mounted with the output side 302 vertically above the input side 301 while the other circuit breaker (here the second circuit breaker 202) is mounted reversed with the input side 301 vertically above the output side 302. In this example, the first circuit breaker 201 is mounted incorrectly with respect to the safety requirement and, therefore, no padlock can be used with this circuit breaker. However, due to the series connection it is sufficient to lock one of the circuit breakers out with the padlock 320 and, therefore, the first circuit breaker can be mounted upside down relative to the intended or normal orientation.

As illustrated, due to the reversed mounting of the circuit breakers, the electrical connection 205 between the series connected circuit breakers can be made short, thereby reducing the risk of short circuit faults in the connection 205.

Clearly, the orientation of the circuit breakers in Fig. 3B can be reversed so that the first circuit breaker 201 is oriented correctly with respect to the intended or normal orientation whereas the second circuit breaker 201 is reversed with respect to the first circuit breaker and, therefore, mounted incorrectly with respect to the intended or normal orientation.

Furthermore, since the connection 205 between the circuit breakers does not need to pass between the laterally displaced circuit breakers, the lateral separation can be reduced thereby saving space.

Fig. 3C shows a possible arrangement of an embodiment of the invention where three circuit breakers are arranged in an electrical series connection similar to Fig. 2B. Here the first circuit breaker 201 is oriented incorrectly with respect to the intended or normal orientation, whereas the second and third circuit breakers 202-203 are oriented correctly with respect to the intended or normal orientation, i.e. with their input sides 301 located above the output sides 302.

Alternatively, the first circuit breaker 201 may oriented correctly with respect to the intended or normal orientation, whereas the second and third circuit breakers 202-203 are oriented incorrectly with respect to the intended or normal orientation and reversed with respect to the first circuit breaker 201, i.e. with their input sides 301 located below the output sides 302.

Due to the inverted orientation of the first 201 respectively the second and the third circuit breakers 202, 203, or vice versa, the connections 205 between the circuit breakers can be made short, i.e. since the connections 205 mainly extend in a region above, alternatively below, the circuit breakers. Thus, the electrical connection 205 is located vertically above the input and output sides 301, 302 of the sides that electrical connection 205 extends from. Alternatively, the electrical connection 205 may located vertically below the input and output sides 301, 302 of the sides that electrical connection 205 extends from.

It is understood that mounting and orientations of the circuit breakers 201-203 may deviate from the illustrated orientations illustrated in Fig. 2B and 2C while the advantages of the short and more reliable connection 205 is still obtained.

Thus, the circuit breakers 201-203 are mounted so that they are displaced laterally with respect to each other, i.e. so that mounted next to each other in a horizontal direction. The circuit breakers 201-203 may be mounted so that output side 302 of one the circuit breakers 201-203 is vertically aligned with the input side 301 of another circuit breaker. The vertical alignment may be in a way so that the output side 302 of one or more the circuit breakers 201-203 has the same or substantially the same vertically height as the input side 301 of one or more of the other circuit breakers 201-203.

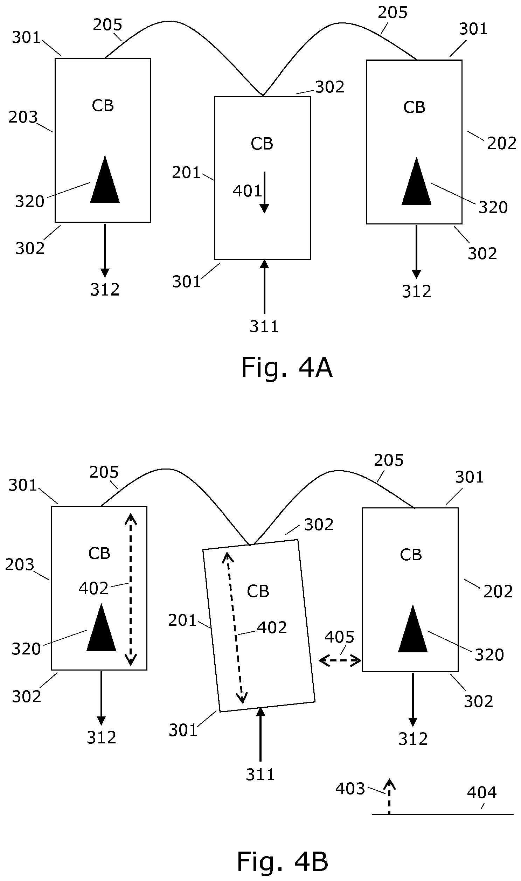

Alternatively, as shown in Fig. 4A, the vertical alignment of the input and output sides 301-302 may involve a displacement of one or more of the circuit breakers in a vertical direction 401 relative to the other circuit breakers.

Similarly, the circuit breakers need not have a perfect upright orientation but may be rotated a few degrees like up to 10° or 20° relative to the perfect upright orientation, in principle up to 45°. Thus, Fig. 4B define vertical orientation lines 402 of the circuit breakers extending between the input side 301 and the output side 302. Thus, the circuit breakers may be rotated so that the vertical orientation lines 402 of two of the two or more breakers are parallel or makes an acute angle of less than 45°. Furthermore, the vertical orientation line 402 of each of the first and second circuit breakers may be parallel or make an acute angle of less than 45° with respect to a normal 403 to a ground plane 404.

For any of the orientations and mountings of the circuit breakers, the mounting serves to minimize a length of an electrical connection 205 between the output side of one of the circuit breakers and the input side of other of the circuit breakers. In this context, minimizing the length is understood as the minimum or close to minimum length which is possible under consideration of minimum lateral separations 405 between adjacent circuit breakers and other mounting constraints.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A power protection system comprising,
- a first circuit breaker (201) and a second circuit breaker (202, 203) arranged in a series connection to break an electrical connection in an auxiliary connection (250) between a power converter and an auxiliary system (220), where
- each of the first and the second circuit breakers has an input side (301) for receiving an incoming flow of current and an output side (302) for outputting the incoming flow of current, where each of the first and the second circuit breakers are configured so that the input side is to be located vertically above the output side, when mounted in normal orientation, and where
- the first and the second circuit breakers are mounted reversed of normal orientation so that one of the first and second circuit breakers (201) is mounted with the output side vertically above the input side while the other circuit breaker (202, 203) is mounted reversed with the input side vertically above the output side.

2. A power protection system according to claim 1, where the first and the second circuit breakers are mounted so that the first circuit breaker is displaced laterally to the second circuit breaker.

3. A power protection system according to any of the preceding claims, where the output side of one of the first or the second circuit breakers is vertically aligned with the input side of the other circuit breaker.

4. A power protection system according to any of the preceding claims, where each of the first and second circuit breakers defines a vertical orientation line extending between the input side and the output side and where the vertical orientation lines for the first and second circuit breakers are parallel or makes an acute angle of less than 45°.

5. A power protection system according to claim 4, where the vertical orientation line of each of the first and second circuit breakers is parallel or makes an acute angle of less than 45° with respect to a normal to a ground plane.

6. A power protection system according to any of the preceding claims, where the first and the second circuit breakers are mounted so as to minimize a length of an electrical connection (205) between the output side of one of the first or the second circuit breakers and the input side of other circuit breaker.

7. A power protection system according to claim 6, where the electrical connection (205) is comprised by the power protection system and is located above or below the input and output sides, which are connected by the electrical connection.

8. A power protection system according to any of the preceding claims, further comprising a third circuit breaker of a similar configuration as the first and second circuit breakers, and where the second and the third circuit breakers are arranged in a parallel connection and so that the parallel connection is arranged in series with the first circuit breaker, and where
- the first circuit breaker is mounted reversed with respect to the second and third circuit breakers, so that the first circuit breaker is mounted with the output side vertically above the input side while the second and third circuit breakers are mounted reversed with their input sides vertically above their respective output sides, or vice versa.

9. A power protection system according to any of the preceding claims, comprising the auxiliary connection (250).

10. A power protection system according to any of the preceding claims configured for a wind turbine (100) and comprising the auxiliary connection (250) arranged to deliver electrical power from a power converter (211) of the wind turbine to the auxiliary system (220) of the wind turbine.

11. A power system (200) comprising
- a power protection system according to any of the preceding claims, and
- a power converter (211) and a network connection (230) arranged to deliver electrical power from the power converter to a network (231), where the auxiliary connection (250) is arranged to deliver electrical power from the power converter (211) to the auxiliary system (220).

12. A wind turbine comprising a power protection system according to any of claims 1-10.

13. A method for protecting a power system, the method comprises
- providing a first circuit breaker (201) and a second circuit breaker (202, 203) arranged in a series connection to break an electrical connection in an auxiliary connection (250) between a power converter and an auxiliary system (220), where
- each of the first and the second circuit breakers has an input side (301) for receiving an incoming flow of current and an output side (302) for outputting the incoming flow of current, where each of the first and the second circuit breakers are configured so that the input side is to be located vertically above the output side, when mounted in normal orientation, and where
- the first and the second circuit breakers are mounted reverse of normal orientation so that one of the first and second circuit breakers (201) is mounted with the output side vertically above the input side while the other circuit breaker (202, 203) is mounted reversed with the input side vertically above the output side, and
- operating the first and second circuit breakers (201-203) to break the electrical connection simultaneously, or substantially simultaneously, if the current in the auxiliary connection exceeds a current threshold.
